# EUROPÄISCHE PATENTANMELDUNG

(11) **EP 1 533 098 A1**
(43) Veröffentlichungstag der Anmeldung: **25.05.2005**
(21) Anmeldenummer: 04018314.7
(22) Anmeldetag: 03.08.2004
(51) Int. Cl.: B29C 45/27

(54) **Steuerung des Wärmeabflusses an der Düsenspritze einer Punktangussdüse durch den Schmelzendruck**

(30) Priorität: 30.08.2003 DE 10340108
(71) Anmelder: ZIMMERMANN, Wolfgang, D-83135 Schechen (DE)
(72) Erfinder: ZIMMERMANN, Wolfgang, D-83135 Schechen (DE)

(57) **Zusammenfassung**

Die Heißkanaldüse wird nicht starr fixiert, sondern kann sich längs ihrer Rotationsachse, geführt von dem eintauchenden Rohrende, in Grenzen bewegen. Durch den Schmelzendruck wird die Düsenspitze (b') auf den gekühlten Düsensitz (d) gepreßt, wodurch ein maximaler Wärmeabfluß einen schnellen Verschluß des Angusses (e) bewirkt. Umgekehrt wird nach Wegnahme des Schmelzendrucks der Wärmeabfluß verringert, sodaß die Aufheizung der Düse beschleunigt wird.

## Beschreibung

Die Erfindung betrifft eine Heißkanaldüse für Thermoplast- und thermoplastische Elastomer-Spritzgußwerkzeuge

Auf dem Markt befmdliche Heißkanal-Angußdüsen für Spritzgußwerkzeuge zur Herstellung von Teilen aus Thermoplasten und thermoplastischen Elastomeren können in vier Typen eingeteilt werden: Offene Düsen, Torpedodüsen, mechanische Verschlußdüsen und

Sonderkonstruktionen. Alle diese Typen werden permanent beheizt, d.h. die Angußstelle bleibt bis zum Auswerfen des Spritzlings plastisch oder zumindest elastisch. Im Falle der beiden erstgenannten Düsentypen kann sich deswegen die gummielastisch zusammengpreßte plastische Seele nach Wegnahme des Nachdrucks entspannen, wobei Schmelze in den Angußkanal zurückfließt. Bei Verschlußdüsen expandiert die plastische Seele beim Entformen, was durch ein Aufwölben der Angußstelle dokumentiert wird. Durch die Expansion der plastischen Seele eines Spritzlings können Lunker, Einfallstellen, schlechte Maßhaltigkeit und, da oft die Makromoleküle am Ende der Kühlphase bereits den elastischen Zustand erreicht haben, innere Spannungen entstehen, die Verzug oder sogar Spannungsrisse verursachen können.

Die im Patent EP-0326565A1 beschriebene, zyklisch beheizte Heißkanaldüse (a) verschließt den Angußkanal am Ende der Nachdruckphase durch Abschalten der Düsenheizung (i), wodurch auch die Angußstelle des Spritzlings (e) erstarrt und so das Expandieren der plastischen Seele verhindert wird.

Für kurze Taktzeiten ist ein schnelles Aufheizen und Abkühlen der Düsenspitze Voraussetzung. Als Düsenheizung (i) haben sich Niederspannungs-Mantelheizleiter als beste Lösung bewährt. Sie erzeugen eine bestimmte Heizleistung, die aus Platzgründen nicht beliebig vergrößert werden kann.

Der vorliegenden Erfmdung liegt daher die Aufgabe zugrunde, durch schnellen Wärmeabfluß in der Düsenspitze zu einem regelbaren Zeitpunkt den Anguß zu versiegeln bzw. durch ein ebenfalls schnelles Aufheizen den thermoplastischen Verschlußstopfen zu schmelzen und dadurch den Angußkanal zu öffnen.

Der schnelle Wärmeabfluß und die schnelle Aufheizung der Düse wird durch die im Anspruch 1 angegebene Düsenkonstruktion gelöst.Die abhängigen Ansprüche beziehen sich auf weitere mögliche Ausgestaltungen und Verwendungen der Erfindung.

Die Erfindung wird nachstehend anhand zweier Ausführungsbeispiele erläutert. Es zeigt
Fig. 1 eine Heißkanaldüse mit konischer Düsenspitze
Fig. 2 eine Heißkanaldüse mit zylindrischer Düsenspitze
Fig. 3 das Einpressen der konischen Düsenspitze in den Düsensitz aufgrund des Schmelzendrucks (stark übertrieben)
Fig 4 das Zurückfedern der konischen Düsenspitze aufgrund der Wegnahme des Schmelzendrucks (ebenfalls stark übertrieben).

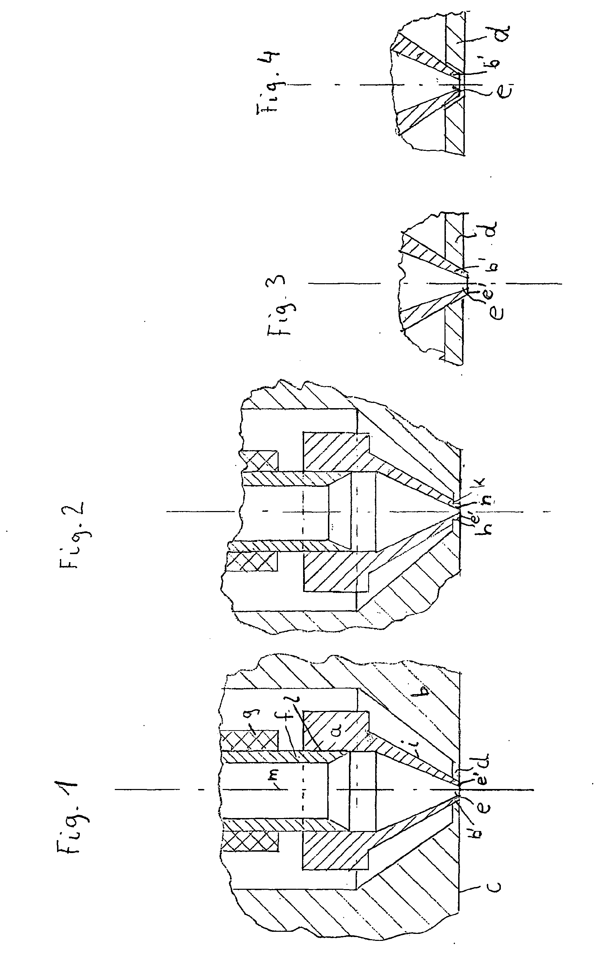

Es kann aus folgenden Gründen eine schnelle Reaktion von weniger als einer Sekunde erreicht werden: Die Angußdüse ist nicht fest ein- oder sogar vorgespannt mittels Schrauben etc., wie bei allen klassischen Heißkanaldüsen, sondern auf dem Zuführrohr (f) längs der Rotationsachse der Düse (z.B. 1 bis 2 mm) verschiebbar, also beweglich. Beim Einspritzen und während der Nachdruckphase wird die konische Düsenspitze durch den Innendruck fest auf ihren Sitz (d) gedrückt und bildet somit neben der schmelzdichten Abdichtung eine ideale metallische Wärmebrücke zum gekühlten Werkzeug hin, wodurch eine schnelle Abkühlung und damit Erstarrung der Schmelze im Inneren der Düsenspitze und im Angußbereich (e) erreicht wird. Bei der Wegnahme des Nachdrucks lockert sich andererseits die Wärmebrücke zwischen Düsenspitze (b', n, k) und gekühltem Düsensitz (d), sodaß sie wesentlich weniger wirksam Wärme abführt und damit eine schnelle Aufheizung ermöglicht. Aufgrund des elastischen Verhaltens des Werkstoffs (zum Beispiel Stahl, auch gehärteter, gesinterter oder legierter Stahl) der Düsenspitze und des Düsensitzes im Hooke'schen Bereich wirkt das System wie eine Feder, was - übertrieben - durch Fig. 3 und Fig. 4 dargestellt wird. Durch den Schmelzendruck wird einerseits die Düsenspitze aufgeweitet, andererseits in die Öffnung des Düsensitzes eingepreßt, sodaß die Düsenspitze - kaum wahrnehmbar - in das Formnest ragt. Bei Wegnahme des Schmelzendrucks federt die Düsenspitze zurück und es entsteht zwischen Düsenspitze und Innenwand des Düsensitzes ein - ebenfalls kaum wahrnehmbarer - Luftspalt, der jedoch den Wärmeabfluß wirksam verringert.

Der gleiche Effekt stellt sich bei einer zylindrischen Düsenspitze (n) (Fig. 2) ein, sofern eine geeignete Passung gewählt wird. Durch die Aufweitung der Düsenspitze - verursacht durch hohen Schmelzendruck - entsteht ein Preßsitz, der wirksam die Wärme ableitet. Zusätzlich bewirkt die senkrecht zur zylindrischen Düsenspitze liegende, ringförmige Auflagefläche (k) der Düsenspitze den gleichen Effekt, wie bei der konischen Düsenspitze.

Viele Versuche mit fixierten Düsen bestätigten diesen Sachverhalt. Es zeigte sich auch, daß mit festgeschraubten Düsen die notwendigen Schmelzentemperaturen von hochschmelzenden Thermoplasten, wie z.B. PA oder PC, kaum oder nicht erreicht werden konnten.

Der Wärmeabfluß kann noch vergrößert werden, wenn das Material des Ringstegs (d) , der übrigens auch eine schräge Kontur aufweisen kann, ganz oder teilweise aus einem gut wärmeleitenden Metall z.B. einer Kupferlegierung besteht.

Das in das Düseninnere ragende Zuführungsrohrende ist in einem Winkel von ca. 30° angefast. Durch den Innendruck wird der dünne Rand gegen die zylindrische Innenwand der Düse gepreßt, wodurch eine wirksame Abdichtung entsteht. Andererseits kann sich das Zuführrohr (f) beliebig thermisch ausdehnen oder schrumpfen.

## Patentansprüche

1. Heißkanaldüse für Punktangüsse, bei der eine Düsenspitze (a) mit ihrem der Kavität zugewandten Ende (b') in eine entsprechend gerstaltete Öffnung (Sitz) (d) der gekühlten Formnestplatte (b) eintaucht und die Stirnfläche (e') der Düsenspitze (b') einen Teil der Kavitätsfläehe (e) bildet,
**dadurch gekennzeichnet,**
**daß** ein Ende eines Schmelzenzufuhrrohres (f) lose in einem Innensitz (l) der Düsenspitze (a) endet und die Düsenspitze innerhalb dieses Sitzes längs der Rohrachse (m) begrenzt verschiebbar ist, wobei das Material der Düsenspitze und des Düsensitzes so gewählt wird,
**daß** es sich durch den beim Einspritzen und beim Nachdruck auftretenden Schmelzedruck elastisch aufweitet und das Ende der Düsenspitze über den Düsensitz (d) eine wärmeableitetende Preßverbindung zur gekühlten Formnestplatte (b) in der Öffnung (Sitz) (d) herstellt.

2. Heißkanaldüse für Punktangüsse nach Patentanspruch 1,
**dadurch gekennzeichnet,**
**daß** die Düsenspitze (a) zumindest in ihrem Endbereich (b') konisch ist.

3. Heißkanaldüse für Punktangüsse nach Patentanspruch 1,
**dadurch gekennzeichnet,**
**daß** die Düsenspitze (a) zumindest in ihrem Endbereich (n) zylindrisch ist.

4. Heißkanaldüse für Punktangüsse nach Patentanspruch 1,
**dadurch gekennzeichnet,**
**daß** die Düsenspitze (n) in ihrem Endbereich zylindrisch ist und der zylindrische Teil mit einer Auflagefläche (k) abgeschlossen ist.

5. Heißkanaldüse für Punktangüsse nach einem der Ansprüche 1 bis 4,
**dadurch gekennzeichnet,**
**daß** der wärmeableitende Sitz (d,h) der Düsenspitze (a) in der Formnestplatte (b) ganz oder teilweise aus einem gut wärmeleitenden Material besteht.

6. Verfahren zum Anspritzen eines Spritzgußteils mittels einer Punktangußdüse nach den Ansprüchen 1 bis 5,
**dadurch gekennzeichnet,**
**daß** beim Einspritzdruck oder Nachdruck das dem Formnest zugewandte Ende der Düsenspitze elastisch aufgeweitete wird und sich dadurch an die Innenwand der Öffnung des ebenfalls elastischen Düsensitzes anpreßt, wodurch eine maximale Wärmeableitung entsteht, die sich bei der Aufhebung des Schmelzedrucks wieder verringert.

7. Verfahren zum Anspritzen eines Spritzgußteils mittels einer Punktangußdüse nach Anspruch 6,
**dadurch gekennzeichnet,**
**daß** die zylindrische Düsenspitze durch den Schmelzedruck zu einem Preßsitz aufgeweitet wird und durch die senkrecht dazu verlaufende, ringförmige Auflagefläche (k) eine weitere Wärmebrücke gebildet wird.
